(19) Europäisches Patentamt
European Patent Office
Office européen des brevets

(11) Numéro de publication: 0 268 526
B1

(12) # FASCICULE DE BREVET EUROPEEN

(45) Date de publication du fascicule du brevet: 06.02.91

(51) Int. Cl.[5]: C 25 B 3/04

(21) Numéro de dépôt: 87402496.1

(22) Date de dépôt: 05.11.87

(54) **Procédé d'électrosynthèse d'aryl alkyl phosphines tertiaires.**

(30) Priorité: 10.11.86 FR 8615630

(43) Date de publication de la demande:
25.05.88 Bulletin 88/21

(45) Mention de la délivrance du brevet:
06.02.91 Bulletin 91/06

(84) Etats contractants désignés:
CH DE FR GB IT LI SE

(56) Documents cités:
DD-A- 79 728

PATENT ABSTRACTS OF JAPAN, vol. 8, no. 236 (C-249)1673r, 30 octobre 1984; & JP-A-59 116 387 (KEI AI KASEI K.K.) 05-07-1984

Le dossier contient des informations techniques présentées postérieurement au dépôt de la demande et ne figurant pas dans le présent fascicule.

(73) Titulaire: SOCIETE NATIONALE DES POUDRES ET EXPLOSIFS
12, quai Henri IV
F-75181 Paris Cédex 04 (FR)

(72) Inventeur: Folest, Jean-Claude
7 Allée Georges Braque
F-94000 Creteil (FR)
Inventeur: Perichon, Jacques
20 Avenue Saint Saens
F-91600 Savigny sur Orge (FR)

(74) Mandataire: Pech, Bernard et al
SNPE - Service Propriété Industrielle 12, Quai Henri IV
F-75181 Paris Cédex 04 (FR)

EP 0 268 526 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

L'invention concerne un procédé d'électrosynthèse d'aryl alkyl phosphines tertiaires par réduction électrochimique d'arylhalogénophosphines en présence d'halogènures organiques aliphatiques, procédé mis en oeuvre dans une cellule d'électrolyse en milieu solvant organique contenant un électrolyte indifférent.

Les phosphines tertiaires et notamment les phosphines tertiaires dissymétriques sont des produits de plus en plus utilisés, du fait du rapide essor de leur application en catalyse homogène.

La principale limitation actuelle à leur développement est leur coût élevé, dû essentiellement à la complexité de leur synthèse.

Les principales voies connues d'accès aux aryl alkyl phosphines tertiaires sont les suivantes:

— réaction d'un organométallique avec une chlorophosphine par exemple

$$C_4H_9Cl \xrightarrow{Mg} C_4H_9MgCl \xrightarrow{(C_6H_5)_2PCl} C_4H_9P(C_6H_5)_2 + MgCl_2$$

Les inconvénients de cette synthèse sont ceux organométaliques à savoir préparation du réactif difficile, usage de métaux réducteurs divisés, usage nécessaire de solvants très inflammables (éthers, tétrahydrofuranne), rendements médiocres ou nuls avec les dérivés halogénés fonctionnalisés tels $ClCH_2$—$COOC_2H_5$, $C_6H_5CH_2Cl$ ou $CH_3COCH_2Cl$.

— alkylation de l'anion d'une phosphine disubstituée par un halogénure organique aliphatique par exemple:

$$(C_6H_5)_2PH \xrightarrow{Na} (C_6H_5)_2PNa \xrightarrow{RX} (C_6H_5)_2PR$$

La principale difficulté de cette synthèse est liée à l-étape de préparation de l'anion de phosphine, généralement réalisée à l'aide de métaux réducteurs.

Par ailleurs, en ce qui concerne l'électrochimie des arylhalogénophosphines les réactions suivantes sont connues.

— R. E. DESSY et Coll., J.A.C.S. 88 (3) 467—70, 1966, réalisent la réduction électrochimique de $(C_6H_5)_2PCl$ et obtiennent $(C_6H_5)_2P$—$P(C_6H_5)_2$. Par réaction ultérieure avec $C_2H_5Br$, ils obtiennent $C_6H_5(C_2H_5)P$—$P(C_2H_5)C_6H_5$.

Il n'existe donc pas, à la connaissance de la demanderesse, de procédé simple et peu couteux de synthèse d'arylalkylphosphines tertiaires.

La présente invention a pour objet un tel procédé.

Le procédé selon l'invention de synthèse d'aryl alkyl phosphines tertiaires est caractérisé en ce qu'on réalise la réduction électrochimique d'arylhalogénophosphines en présence d'halogénures organiques aliphatiques dans une cellule d'électrolyse munie d'électrodes en milieu solvant organique contenant un électrolyte indifférent, et en ce qu'on utilise un anode consommable en un métal choisi dans le groupe constitué par les métaux réducteurs et leurs alliages. On entend par "leurs alliages", tout alliage contenant au moins un métal réducteur.

On entend par "halogénure organique aliphatique" un halogénure organique dont l'halogène n'est pas directement lié à un carbone d'un cycle aromatique.

De façon préférée, on utilise une anode consommable en un métal choisi dans le groupe constitué par le zinc, l'aluminium, le magnésium, et leurs alliages.

On entend par "leurs alliages", tout alliage contenant au moins un des trois métaux précités, à savoir le zinc, l'aluminium ou le magnésium.

Ce procédé est très simple de mise en oeuvre, puisqu'il peut être réalisé dans une cellule d'électrolyse à un seul compartiment, sans diaphragme ni fritté, ce qui est très important, notamment au stade industriel.

Ce procédé peut être mis en oeuvre avec des solvants relativement peu toxiques et peu inflammables, utilisables et utilisés de façon courante dans l'industrie (N,N- diméthylformamide —DMF— par exemple).

Il faut également noter, selon l'invention, l'absence de dégradation du solvant à l'anode, ce qui est particulièrement intéressant et avantageux.

Par ailleurs, par rapport aux procédés actuellement connus, le procédé selon l'invention a l'avantage d'éviter tous les problèmes liés à l'emploi de réactifs organométalliques dangereux: utilisation de métaux divisés, de réactifs très réducteurs ou très basiques, de solvants dangereux. Il a également l'avantage de permettre, de façon inattendue, de bons rendements avec les halogénures organiques aliphatiques fonctionnalisés tels que $ClCH_2$—$COOC_2H_5$, $C_6H_5CH_2Cl$ ou $CH_3COCH_2Cl$.

Les arylhalogénophosphines utilisées dans le procédé selon l'invention répondent à la formule générale $A_n A'_{n'} Px_m$ dans laquelle

. X représente un halogène choisi de préférence dans le groupe constitué par le chlore et le brome

. A et A' représentent des groupes aromatiques identiques ou différents

. n, n' et m sont des nombres entiers tels que $m + n + n' = 3$, $m \neq 0$ et $n + n' \neq 0$.

De façon préférée, A et/ou A' représentent un groupement phényle, éventuellement substitué.

De façon particulièrement préférée, l'arylhalogénophosphine est la diphénylchlorophosphine ou la phényldichlorophosphine.

Les halogénures organiques aliphatiques utilisés dans le procédé selon l'invention répondent à la formule générale RX' dans laquelle

. X' représente un halogène choisi de préférence dans le groupe constitué par le chlore et le brome

. R représente une chaine aliphatique éventuellement substituée.

De façon préférée, R représente une chaine alkyle, éventuellement substituée, comportant de 1 à 18 atomes de carbone.

De façon particulièrement préférée, R représente une chaîne alkyle comportant de 1 à 8 atomes de carbone, éventuellement substituée.

Lorsque R représente une chaine substituée, les substituants doivent être plus difficiles à réduire, dans les conditions de l'électrosynthèse, que l'arylhalogénophosphine. Ces substituants sont de préférence choisis dans le groupe constitué par les chaines alkyles comportant de 1 à 8 atomes de carbone, les groupements esters, les halogènes, les groupements aryles et les groupements vinyles.

Selon une variante particulièrement préférée de l'invention, R représente une chaine alkyle substituée par un halogène, ce qui permet d'obtenir par exemple des diphosphines de formule générale.

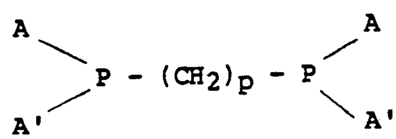

A et A' ayant la signification précitée et p étant un nombre entier égal ou supérieur à 2, par réduction de AA'PCl en présence de $Cl—(CH_2)_p—Cl$.

La cellule d'électrolyse est une cellule classique, de préférence non compartimentée. Cette possibilité d'utiliser une cellule à un seul compartiment est un avantage majeur, comme cela a déjà été mentionné.

Selon le procédé objet de la présente invention, l'anode est consommée au cours de la réaction électrochimique dont elle est le siège. On utilise une anode consommable en un métal choisi dans le groupe constitué par les métaux réducteurs et leurs alliages, de façon préférée dans le groupe constitué par le magnésium, le zinc, l'aluminium et leurs alliages.

Cette anode peut avoir une forme quelconque et notamment toutes les formes classiques d'électrodes métalliques comme par exemple fil torsadé, barreau plat, barreau cylindrique, lit renouvelable, billes, toile, grille.

De façon préférée, on utilise un barreau cylindrique de diamètre adapté aux dimensions de la cellule.

La cathode est un métal quelconque tel que l'acier inoxydable, le nickel, le platine, l'or, l'argent, ou du carbone. Elle est constituée, de façon préférée, par une grille ou une plaque cylindrique disposée concentriquement autour de l'anode.

Les électrodes sont alimentées en courant continu par l'intermédiaire d'une alimentation stabilisée.

Les solvants organiques utilisés dans le cadre de la présente invention sont les solvants peu protiques utilisés usuellement en électrochimie organique. On peut citer par exemple le DMF, l'acétonitrile, la tétraméthylurée (TMU), la N-méthylpyrrolidone (NMP), l'hexaméthylphosphorotriamide (HMPT) et les mélanges de ces produits.

Les électrolytes indifférents utilisés sont ceux habituellement utilisés en électrochimie organique. On peut citer par exemple les sels dont l'anion est un halogènure, un perchlorate ou un fluoroborate et le cation un ammonium quaternaire, le lithium, le sodium, le potassium, le magnésium, le zinc ou l'aluminium.

On utilise de façon préférée l'iodure ou le fluoroborate de tétrabutylammonium.

De façon préférée, la concentration en électrolyte indifférent dans le solvant organique est comprise entre 0,01 M et 0,5 M.

De façon également préférée, la concentration en arylhalogénophosphine dans le solvant organique est comprise entre 0,2 M et 2 M.

Le rapport des concentrations dans le solvant organique entre l'halogénure organique aliphatique et l'arylhalogénophosphine peut être quelconque. On utilise de préférence un excès d'halogénure organique aliphatique et notamment un rapport de concentrations compris entre 1,5 et 3.

La température de réaction est en général comprise entre −10°C et +50°C et de préférence comprise entre 0 et +10°C.

La densité de courant sur la cathode est de préférence choisie entre 0,5 et 10 $A/dm^2$. On opère en général à intensité constante, mais on peut également opérer à tension constante, à potentiel contrôlé ou avec intensité et potentiel variables.

Avant l'électrolyse, on désoxygène la solution par barbotage d'un gaz inerte, azote ou argon par exemple.

L'invention est illustrée par les exemples non limitatifs qui vont suivre. Pour réaliser ces exemples, on utilise une cellule d'électrolyse classique, non compartimentée.

La partie supérieure de la cellule est en verre et est équipée de 5 tubulures permettant l'arrivée et la

sortie du gaz inerte, les prélèvements éventuels de solution en cours d'électrolyse, les passages électriques.

La partie inférieure est constituée par un bouchon muni d'un joint vissé sur la partie supérieure en verre.

Le volume total de la cellule est de 45cm$^3$.

L'anode est formé par un barreau cylindrique de 1 cm de diamètre.

Elle est introduite dans la cellule par la tubulure centrale et se trouve ainsi située approximativement en position axiale par rapport à la cellule. Elle plonge dans la solution sur une longueur d'environ 2,5 cm.

La cathode est constituée par une toile cylindrique disposée concentriquement autour de l'anode. La surface de travail de la cathode est de l'ordre de 20cm$^2$. La cellule est plongée dans un bain thermostatique réglé à la température choisie.

On introduit dans la cellule une solution de 20 mmol de monohalogénoarylphosphine (ou 10 mmol de dihalogénoarylphosphine) et de N mmol d'halogénure organique aliphatique dans 30 ml de solvant rendu conducteur de l'électricité par ajout de 1,5 mmol d'iodure de tétrabutylammonium.

Après dégazage de la solution par barbotage d'azote, on impose entre les électrodes un courant d'intensité constante de 0,4 A pendant environ 3 h, ce qui correspond à la disparition complète de l'arylhalogénophosphine.

Après électrolyse, deux méthodes d'extraction ont été mises en oeuvre, selon la phosphine obtenue:

Méthode A: Acidification du milieu réactionnel par une solution aqueuse d'acide chlorhydrique puis extraction de la phosphine synthétisée par l'éther diéthylique.

Méthode B: Acidification de la solution jusqu'à PH 4—5, avec une solution aqueuse diluée et froide d'acide chlorhydrique puis filtration et recristallisation dans le butanol du précipité recueilli.

Les produits obtenus sont identifiés selon les méthodes classiques d'identification, par comparaison avec des échantillons authentiques. Les méthodes suivantes ont notamment été mises en oeuvre: spectrométrie de masse, chromatographie en phase gazeuse, polarographie en présence de sels de nickel, mesure du point de fusion.

Exemple 1 à 19

Le tableau suivant précise pour chaque exemple d'une part les conditions opératoires particulières à savoir la nature de l'arylhalogéphosphine de départ, la nature et la quantité de l'halogénure organique aliphatique de départ, la nature du solvant et des électrodes utilisées la méthode d'extraction mise en oeuvre et d'autre part le résultat obtenu à savoir la nature du produit synthétisé et le rendement correspondant en produit isolé, exprimé par rapport à l'arylhalogénophosphine de départ.

TABLEAU

| Ex. N° | Aryl halogéno phosphine de départ | Halogénure organique aliphatique de départ (mmol) | Solvant | Cathode | Anode | Méthode d'extraction | Produit obtenu | Rendement % |
|---|---|---|---|---|---|---|---|---|
| 1 | $\phi_2PCl$ | n Bu Br (30) | DMF | INOX | Mg | A | $\phi_2PBu$ | 82 |
| 2 | $\phi_2PCl$ | n Bu Br (30) | NMP | INOX | Mg | A | $\phi_2PBu$ | 93 |
| 3 | $\phi_2PCl$ | $\phi CH_2$ Cl (30) | NMP | INOX | Mg | A | $\phi_2PCH_2\phi$ | 44 |
| 4 | $\phi_2PCl$ | $\phi CH_2$ Cl (30) | DMF | INOX | Mg | A | $\phi_2PCH_2\phi$ | 30 |
| 5 | $\phi_2PCl$ | Cl $CH_2$ $CO_2$ Et (30) | DMF | INOX | Mg | A | $\phi_2PCH_2CO_2Et$ | 45 |
| 6 | $\phi_2PCl$ | Cl $CH_2$ $CO_2$ Et (30) | NMP | INOX | Mg | A | $\phi_2PCH_2CO_2Et$ | 53 |
| 7 | $\phi_2PCl$ | Cl $CH_2$ $CO_2$ Et (30) | DMF | Pt | Mg | A | $\phi_2PCH_2CO_2Et$ | 70 |
| 8 | $\phi_2PCl$ | Cl $CH_2$ $CO_2$ Et (30) | DMF | C | Zn | A | $\phi_2PCH_2CO_2Et$ | 30 |
| 9 | $\phi_2PCl$ | Br $CH_2$ $CO_2$ Et (30) | DMF | INOX | Mg | A | $\phi_2PCH_2CO_2Et$ | 10 |
| 10 | $\phi_2PCl$ | $CH_3$ CH Cl $CO_2$ Et(30) | DMF | INOX | Mg | A | $\phi_2PCH(CH_3)CO_2Et$ | 45 |

$\phi$ signifie $C_6H_5$
Et " $C_2H_5$
Bu " $C_4H_9$

TABLEAU

| Ex. N° | Aryl halogéno phosphine de départ | Halogénure organique aliphatique de départ (mmol) | Solvant | Cathode | Anode | Méthode d'extraction | Produit obtenu | Rendement % |
|---|---|---|---|---|---|---|---|---|
| 11 | $\phi_2PCl$ | $\phi CH = CH\ CH_2\ Cl$ (30) | DMF | INOX | Mg | A | *$\phi_2PCH_2CH{=}CH\phi$ | 15 |
| 12 | $\phi_2PCl$ | $Br(CH_2)_4\ Br$ (10) | NMP | INOX | Mg | B | $\phi_2P(CH_2)_4\ P\phi_2$ | 83 |
| 13 | $\phi_2PCl$ | $Br(CH_2)_4\ Br$ (10) | DMF | INOX | Mg | B | $\phi_2P(CH_2)_4\ P\phi_2$ | 60 |
| 14 | $\phi_2PCl$ | $Br\ (CH_2)_2\ Br$ (10) | NMP | INOX | Mg | B | $\phi_2P(CH_2)_2\ P\phi_2$ | 42 |
| 15 | $\phi_2PCl$ | $Cl\ CH_2\ CH_2\ Cl$ (10) | NMP | INOX | Mg | B | $\phi_2P(CH_2)_2\ P\phi_2$ | 67 |
| 16 | $\phi PCl_2$ | nBu Br (30) | DMF | INOX | Mg | A | $\phi PBu_2$ | 55 |
| 17 | $\phi PCl_2$ | $CH_3\ (CH_2)_6\ Br$ (30) | DMF | INOX | Mg | A | $\phi P\left[(CH_2)_6CH_3\right]_2$ | 39 |
| 18 | $\phi PCl_2$ | $Cl\ CH_2\ CO_2\ Et$ (30) | DMF | INOX | Mg | A | $\phi P(CH_2CO_2Et)_2$ | 19 |
| 19 | $\phi PCl_2$ | $\phi CH_2\ Br$ (30) | DMF | INOX | Mg | A | $\phi P(CH_2\phi)_2$ | 17 |

$\phi$ signifie $C_6H_5$

Et " $C_2H_5$

Bu " $C_4H_9$

**Revendications**

1. Procédé de synthèse d'aryl alkyl phosphines tertiaires caractérisé en ce qu'on réalise la réduction électrochimique d'arylhalogénophosphines en présence d'halogénures organiques aliphatiques dans une cellule d'électrolyse munie d'électrodes en milieu solvant organique contenant un électrolyte indifférent, et en ce qu'on utilise une anode consommable en un métal choisi dans le groupe constitué par les métaux réducteurs et leurs alliages.

2. Procédé de synthèse selon la revendication 1 caractérisé en ce qu,on utilise une anode consommable en un métal choisi dans le groupe constitué par le zinc, le magnésium, l'aluminium et leurs alliages.

3. Procédé selon la revendication 1 caractérisé en ce que les arylhalogénophosphines répondent à la formule générale $A_n A'_{n'} PX_m$ dans laquelle

. X représente un halogène choisi de préférence dans le groupe constitué par le chlore et le brome

. A et A' représentent des groupes aromatiques, identiques ou différents

. n, n' et m sont des nombres entiers tels que $m + n + n' = 3$, $m \neq 0$ et $n + n' \neq 0$.

4. Procédé selon la revendication 3 caractérisé en ce que x représente le chlore.

5. Procédé selon la revendication 3 caractérisé en ce que A et/ou A' représentent un groupement phényle, eventuellement substitué.

6. Procédé selon l'une quelconque des revendications 4 et 5 caractérisé en ce que l'arylhalogénophosphine est la diphénylchlorophosphine ou la phényldichlorophosphine.

7. Procédé selon la revendication 1 caractérisé en ce que les halogénures organiques aliphatiques répondent à la formule générale RX' dans laquel

. X' représente un halogène choisi dans le groupe constitué par le chlore et le brome

. R représente une chaine aliphatique éventuellement substituée.

8. Procédé selon la revendication 7 caractérisé en ce que R représente une chaine alkyle éventuellement substituée, comportant de 1 à 18 atomes de carbone.

9. Procédé selon l'une quelconque des revendications 7 et 8 caractérisé en ce que R est substitué par un substituant choisi dans le groupe constitué par les chaines alkyles comportant de 1 à 8 atomes de carbone, les groupements esters, les halogènes, les groupements aryles et les groupements vinyles.

10. Procédé selon l'une quelconque des revendications 8 et 9 caractérisé en ce que R représente une chaine alkyle substituée par un halogène.

11. Procédé selon l'une quelconque des revendications 1 et 2 caractérisé en ce que la cellule d'électrolyse est non compartimentée.

12. Procédé selon la revendication 1 caractérisé en ce que le solvant organique est choisi dans le groupe constitué par le N,N-diméthylformamide, la tétraméthylurée, le tétrahydrofuranne, la N-méthylpyrrolidone, l'hexaméthylphosphorotriamide et les mélanges de ces produits.

13. Procédé selon la revendication 1 caractérisé en ce que l'électrolyte indifférent est l'iodure ou le fluoroborate de tétrabutylammonium.

14. Procédé selon la revendication 1 caractérisé en ce que la température de réaction est comprise entre −10°C et +50°C.

15. Procédé selon la revendication 1 caractérisé en ce que le rapport molaire halogénure organique aliphatique/arylhalogénophosphine est compris entre 1,5 et 3.

**Patentansprüche**

1. Verfahren zur Synthese von tertiären Aryl-Alkyl-Phosphinen, dadurch gekennzeichnet, daß man die elektrochemische Reduktion von Arylhalogenphosphinen in Gegenwart organischer aliphatischer Halogenide in einer mit Elektroden ausgerüsteten Elektrolysezelle in einem organischen Lösungsmittelmedium, das einen indifferenten Elektrolyt enthält, durchführt und daß man eine verzehrbare Anode aus einem aus der Gruppe gewählten Metall verwendet, die aus den reduzierenden Metallen und ihren Legierungen gebildet ist.

2. Syntheseverfahren nach dem Anspruch 1, dadurch gekennzeichnet, daß man eine verzehrbare Anode aus einem aus der Gruppe gewählten Metall verwendet, die aus Zink, Magnesium, Aluminium und ihren Legierungen gebildet ist.

3. Verfahren nach dem Anspruch 1, dadurch gekennzeichnet, daß die Arylhalogenphosphine der allgemeinen Formel $A_n A'_{n'}, PX_m$ entsprechen, in der

X ein Halogen bedeutet, das vorzugsweise aus der aus Chlor und Brom gebildeten Gruppe gewählt ist

A und A' gleiche oder verschiedene aromatische Gruppen bedeuten

n, n' und m ganze Zahlen, wie $m + n + n' = 3$, $m \neq 0$ und $n + n' \neq 0$ sind.

4. Verfahren nach dem Anspruch 3, dadurch gekennzeichnet, daß X Chlor bedeutet.

5. Verfahren nach Anspruch 3, dadurch gekennzeichnet, daß A und/oder A' eine, ggf. substituierte, Phenylgruppe bedeuten.

6. Verfahren nach irgendeinem der Ansprüche 4 und 5, dadurch gekennzeichnet, daß das Arylhalogenphosphin das Diphenylchlorphosphin oder das Phenyldichlorphosphin ist.

7. Verfahren nach dem Anspruch 1, dadurch gekennzeichnet, daß die organischen aliphatischen

Halogenide der allgemeinen Formel RX' entsprechen, in der
X' ein Halogen bedeutet, das aus der aus Chlor und Brom gebildeten Gruppe gewählt ist
R eine, ggf. substituierte, aliphatische Kette bedeutet.

8. Verfahren nach dem Anspruuch 7, dadurch gekennzeichnet, daß R eine, ggf. substituierte, Alkylkette mit 1 bis 18 Kohlenstoffatomen bedeutet.

9. Verfahren nach irgendeinem der Ansprüche 7 und 8, dadurch gekennzeichnet, daß R durch einen Substituenten substituiert wird, der aus der Gruppe gewählt ist, die von den Alkylketten mit 1 bis 8 Kohlenstoffatomen, den Estergruppen, den Halogenen, den Arylgruppen und den Vinylgruppen gebildet wird.

10. Verfahren nach irgendeinem der Ansprüche 8 und 9, dadurch gekennzeichnet, daß R eine durch ein Halogen substituierte Alkylkette bedeutet.

11. Verfahren nach irgendeinem der Ansprüche 1 und 2, dadurch gekennzeichnet, daß die Elektrolysezelle nicht unterteilt ist.

12. Verfahren nach dem Anspruch 1, dadurch gekennzeichnet, daß das organische Lösungsmittel aus der Gruppe gewählt wird, die von N,N-Dimethylformamid, Tetramethylharnstoff, Tetrahydrofuran, N-Methylpyrrolidon, Hexamethylphosphortriamid und den Mischungn dieser Stoffe gebildet wird.

13. Verfahren nach dem Anspruch 1, dadurch gekennzeichnet, daß der indifferente Elektrolyt Tetrabutylammoniumjodid oder -fluorborat ist.

14. Verfahren nach dem Anspruch 1, dadurch gekennzeichnet, daß die Reaktionstemperatur im Bereich von $-10°C$ bis $+50°C$ liegt.

15. Verfahren nach dem Anspruch 1, dadurch gekennzeichnet, daß das Molverhältnis von organischem aliphatischem Halogenid/Arylhalogenphosphin im Bereich von 1,5 bis 3 liegt.

## Claims

1. Process for the synthesis of tertiary arylalkylphosphines, characterized in that the electrochemical reduction of arylhalophosphines is carried out in the presence of aliphatic organic halides in an electrolytic cell equipped with electrodes in an organic solvent medium containing a supporting electrolyte, and in that a sacrificial anode, made of a metal chosen from the group consisting of reducing metals and their alloys, is used.

2. Synthesis process according to Claim 1, characterized in that a sacrificial anode made of a metal chosen from the group consisting of zinc, magnesium, aluminium and their alloys is used.

3. Process according to Claim 1, characterized in that the arylhalophosphines correspond to the general formula $A_n A'_{n'} PX_m$ in which
. X denotes a halogen preferably chosen from the group consisting of chlorine and bromine
. A and A' denote identical or different aromatic groups
. n, n' and m are integers such that $m + n + n' = 3$, $m \neq 0$ and $n + n' \neq 0$.

4. Process according to Claim 3, characterized in that X denotes chlorine.

5. Process according to Claim 3, characterized in that A and/or A' denote a phenyl group which is optionally substituted.

6. Process according to either of Claims 4 and 5, characterized in that the arylhalophosphine is diphenylchlorophosphine or phenyldichlorophosphine.

7. Process according to Claim 1, characterized in that the aliphatic organic halides correspond to the general formula RX' in which
. X' denotes a halogen preferably chosen from the group consisting of chlorine and bromine
. R denotes an aliphatic chain which is optionally substituted.

8. Process according to Claim 7, characterized in that R denotes an alkyl chain, optionally substituted, containing from 1 to 18 carbon atoms.

9. Process according to either of Claims 7 and 8, characterized in that R is substituted with a substituent chosen from the group consisting of alkyl chains containing from 1 to 8 carbon atoms, ester groups, halogens, aryl groups and vinyl groups.

10. Process according to either of Claims 8 and 9, characterized in that R denotes an alkyl chain substituted with a halogen.

11. Process according to either of Claims 1 and 2, characterized in that the electrolytic cell is non-compartmented.

12. Process according to Claim 1, characterized in that the organic solvent is chosen from the group consisting of N,N-dimethylformamide, tetramethylurea, tetrahydrofuran, N-methylpyrrolidone, hexamethylphosphorotriamide and the mixtures of these products.

13. Process according to Claim 1, characterized in that the supporting electrolyte is tetrabutylammonium iodide or fluoroborate.

14. Process according to Claim 1, characterized in that the reaction temperature is between $-10°C$ and $+50°C$.

15. Process according to Claim 1, characterized in that the mole ratio aliphatic organic halide/arylhalophosphine is between 1.5 and 3.